(19) Europäisches Patentamt
European Patent Office
Office européen des brevets

(11) **EP 2 013 043 B1**

(12) **FASCICULE DE BREVET EUROPEEN**

(45) Date de publication et mention
de la délivrance du brevet:
**12.05.2010 Bulletin 2010/19**

(51) Int Cl.:
***B60G 17/018*** *(2006.01)*   ***B60G 17/016*** *(2006.01)*
***B60G 21/055*** *(2006.01)*

(21) Numéro de dépôt: **07731654.5**

(86) Numéro de dépôt international:
**PCT/FR2007/050834**

(22) Date de dépôt: **21.02.2007**

(87) Numéro de publication internationale:
**WO 2007/125227 (08.11.2007 Gazette 2007/45)**

(54) **SYSTEME DE SUSPENSION A CONTROLE ACTIF DE COMMANDE ANTI-ROULIS**

RAUDAUFHÄNGUNG MIT AKTIVER WANKSTABILISIERUNG

AN ACTIVE ROLL CONTROL SYSTEM FOR A SUSPENSION SYSTEM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.04.2006 FR 0603852**

(43) Date de publication de la demande:
**14.01.2009 Bulletin 2009/03**

(73) Titulaire: **Renault SAS**
**92100 Boulogne Billancourt (FR)**

(72) Inventeurs:
• **GOUDSWAARD, Edwin**
**NL-2496 Ph Den Haag (NL)**
• **POTHIN, Richard**
**F-78760 Jouars-pontchartrain (FR)**

(56) Documents cités:
**WO-A-2005/087521     US-A- 5 948 027**

**Description**

L'invention concerne un procédé de commande d'un système anti-roulis actif d'un véhicule, destiné à améliorer la stabilité du véhicule, donc son comportement et son confort de conduite. Elle concerne également un dispositif de mise en oeuvre dudit procédé.

Un véhicule automobile est conçu de manière à présenter un comportement le plus stable possible quelle que soit la sollicitation du conducteur ou l'état de la chaussée. Cependant, certaines situations de conduite peuvent engendrer une perte de contrôle du véhicule, comme par exemple un évitement d'obstacle simple ou double. Dans pareil cas, les pertes de contrôle sont souvent provoquées par une réponse du véhicule inadaptée, car trop vive et/ou pas assez amortie et/ou peu prévisible.

Le comportement des véhicules automobiles peut être amélioré dans ces situations délicates grâce à un système actif anti-roulis, comprenant une ou deux barres placées à l'avant ou/et à l'arrière des véhicules, et piloté en fonction de la vitesse des véhicules.

Une solution actuelle pour piloter un système anti-roulis à deux barres associées à deux actionneurs avant et arrière est décrit dans le brevet US 5 948 027, déposé au nom de FORD GLOBAL TECHNOLOGIES. La structure de contrôle présente une boucle fermée en vitesse de lacet, la consigne de vitesse de lacet étant construite à partir de l'angle volant, de la vitesse du véhicule et d'un coefficient de sous virage. Selon le procédé décrit, si la mesure de vitesse de lacet est supérieure à celle désirée, alors la distribution de charge est augmentée sur la barre avant, et inversement, si elle est inférieure à celle désirée, la distribution de charge sur la barre arrière est augmentée. L'inconvénient de ce procédé d'amélioration de la stabilité d'un véhicule réside dans le fait que les bornes de saturation de la commande sont très restrictives, car il impose que le signe du couple appliqué sur la barre anti-roulis avant est le même que celui du couple appliqué sur la barre arrière. De plus, le procédé ne s'applique pas à un système mono-train.

Le but de l'invention est de pallier cet inconvénient, en proposant un procédé de commande d'un système anti-roulis mono ou bi-train actif, optimisant la réponse en lacet du véhicule à la suite d'un coup de volant du conducteur, en fonction de sa vitesse de déplacement longitudinal.

Pour cela, un premier objet de l'invention est un procédé de commande d'un système anti-roulis actif pour véhicule automobile, équipé de deux barres anti-roulis au niveau des trains avant et arrière, associée chacune à un actionneur piloté par une unité centrale électronique en fonction par exemple de l'angle du volant et de la vitesse du véhicule, caractérisé en ce qu'il détermine le couple anti-roulis à appliquer sur chacun des deux trains avant et arrière correspondant à une consigne de vitesse de lacet en réponse à un angle de braquage du train avant et à une vitesse longitudinale du véhicule et assurant la stabilité du véhicule en fonction de l'accélération latérale subie par le véhicule.

Selon une caractéristique du procédé, il comporte les étapes suivantes :

- détermination de la vitesse de lacet de consigne en réponse à un angle de braquage moyen du train avant et à une vitesse longitudinale du véhicule,
- calcul de la différence entre la vitesse de lacet mesurée et la consigne de vitesse de lacet,
- détermination d'une répartition de charge k' de correction à partir de ladite différence entre la vitesse de lacet mesurée et la vitesse de lacet de consigne, destinée à moduler la répartition de charge $k_p$ passive du véhicule,
- calcul de la commande k de répartition de charge entre les deux trains, à appliquer sur les actionneurs des barres anti-roulis, par modulation de la répartition de charge du véhicule $k_p$ par la répartition de charge de correction k' :
  $k = k' + k_p$
- saturation de ladite commande k de répartition de charge entre les deux trains, calculée précédemment, pour assurer la stabilité du véhicule,
- détermination des consignes de couples à appliquer sur les trains avant et arrière, à partir du couple total calculé par ailleurs et de la répartition de charge k saturée d'une part, et de l'accélération latérale subie par le véhicule d'autre part.

Selon une autre caractéristique du procédé, la saturation de la commande de répartition de charge entre les deux trains est telle que sa valeur est inférieure ou égale à la répartition de charge passive du véhicule.

Un second objet de l'invention est un dispositif de mise en oeuvre du procédé de commande d'un système anti-roulis actif pour véhicule, intégré dans une unité centrale électronique du véhicule et pilotant au moins un actionneur agissant sur la raideur d'au moins une des deux barres anti-roulis, caractérisé en ce qu'il comporte :

- des moyens de détermination de la consigne de vitesse de lacet en réponse à un angle de braquage moyen du train avant et à une vitesse longitudinale du véhicule,
- des moyens de calcul de la différence entre la vitesse de lacet mesurée et la consigne de vitesse de lacet,
- des moyens de commande délivrant une répartition de charge k' de correction à partir de ladite différence entre la vitesse de lacet mesurée et la vitesse de lacet de consigne, destinée à moduler la consigne de répartition de charge par la répartition de charge de correction,

- des moyens de calcul de la commande k de répartition de charge entre les deux trains, résultant de la modulation de la répartition de charge passive du véhicule par la répartition de charge de *correction : k = k' + k$_p$*
- des moyens de saturation de ladite commande de répartition de charge pour assurer la stabilité du véhicule,
- des moyens de calcul des couples désirés à appliquer sur les trains avant et arrière, à partir du couple total et de la répartition de charge k saturée d'une part, et de l'accélération latérale subie par le véhicule d'autre part.

Selon une caractéristique du dispositif de commande, lesdits moyens de commande délivrant une répartition de charge k' de correction à partir de ladite différence entre la vitesse de lacet mesurée et la vitesse de lacet de consigne, sont réalisés par un correcteur du type proportionnel-intégral-dérivé PID avec un procédé de désaturation de l'intégrateur, dit « anti-windup ».

D'autres caractéristiques et avantages de l'invention apparaîtront à la lecture de la description d'un mode de réalisation de l'invention, illustrés par les figures suivantes qui sont :

- la figure 1 : un schéma fonctionnel d'un dispositif de commande d'un système anti-roulis d'un véhicule;
- la figure 2: un détail fonctionnel des moyens de commande PID du dispositif ;
- la figure 3 : la courbe de variation de la rigidité de dérive d'un train en fonction du report de charge sur ce train.

L'invention consiste à calculer la répartition de couple anti-roulis optimale à appliquer sur les actionneurs des deux trains de pneus, selon une configuration mono-train ou bi-train avant et arrière du système anti-roulis actif, correspondant à une consigne de vitesse de lacet en réponse à un angle de braquage du train avant et à une vitesse longitudinale du véhicule, dans le but d'augmenter la stabilité en lacet du véhicule.

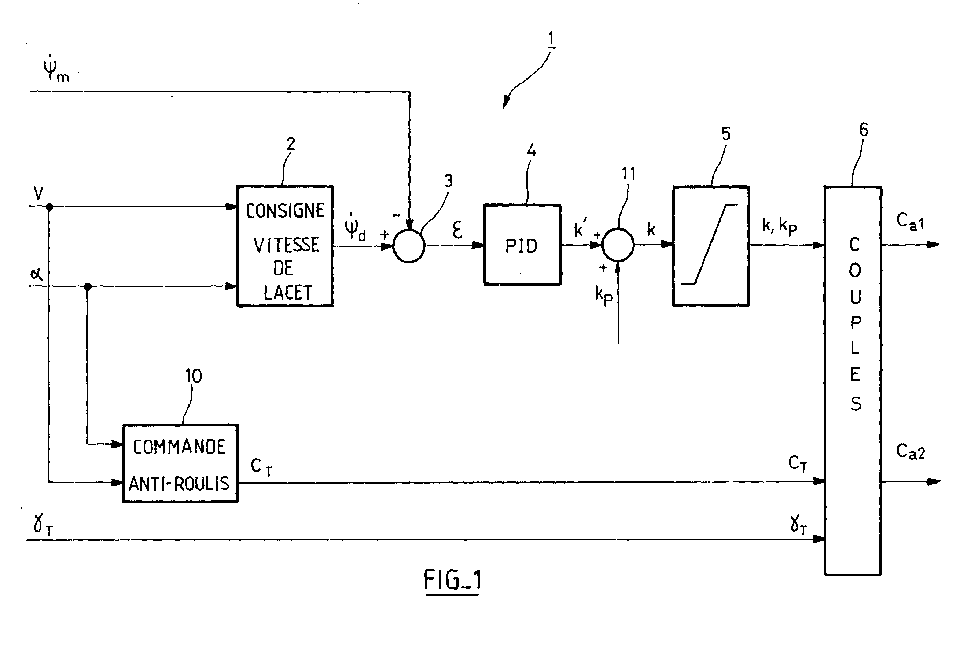

Selon le schéma de la figure 1, concernant un dispositif 1 de commande d'un système anti-roulis pour véhicule, ledit dispositif étant généralement intégré dans une unité centrale électronique du véhicule, les signaux d'entrée sont l'angle volant $\alpha$, la vitesse V du véhicule, la vitesse de lacet $\dot{\psi}_m$ mesurée et l'accélération latérale $\gamma_T$ subie par le véhicule qui sont délivrées par des capteurs. Dans le cas d'un système anti-roulis bi-train, le dispositif de commande utilise de plus la consigne de couple total C$_T$ anti-roulis à distribuer entre les trains avant et arrière.

Ce dispositif 1 de commande comporte des moyens 2 de détermination de la consigne de vitesse de lacet $\dot{\psi}_d$ en réponse à un angle de braquage moyen $\alpha$ du train avant et à une vitesse longitudinale V du véhicule, à partir d'un modèle à deux roues par exemple utilisant la vitesse de véhicule, selon l'équation suivante (E$_1$) :

$$(\text{E}_1) \quad \frac{\partial}{\partial t}\begin{bmatrix} \delta \\ \dot{\psi}_d \end{bmatrix} = \begin{bmatrix} -\dfrac{D_1 L_1^2 + D_2 L_2^2}{V I_z} & \dfrac{D_2 L_2 - D_1 L_1}{I_z} \\ -1 + \dfrac{D_2 L_2 - D_1 L_1}{M V^2} & -\dfrac{D_1 + D_2}{MV} \end{bmatrix}\begin{bmatrix} \delta \\ \dot{\psi}_d \end{bmatrix} + \begin{bmatrix} \dfrac{D_1 L_1}{I_z} \\ \dfrac{D_1}{MV} \end{bmatrix}\alpha$$

dans laquelle M est la masse totale du véhicule, I$_z$ son inertie autour d'un axe vertical passant par son centre de gravité, L$_1$ et L$_2$ la distance du centre de gravité aux essieux avant et arrière respectivement, $\alpha$ l'angle de braquage moyen du train avant, D$_1$ et D$_2$ la rigidité de dérive des trains avant et arrière respectivement et $\delta$ l'angle de dérive.

Selon une variante, on peut considérer une relation quasi-statique, en considérant que la vitesse $\dot{\delta}$ de l'angle de dérive est nulle.

La différence entre la vitesse de lacet $\dot{\psi}_m$ mesurée et la consigne $\dot{\psi}_d$ de vitesse de lacet est obtenue dans des moyens 3 et elle est corrigée ensuite par des moyens 4 de commande, délivrant une répartition de charge k' de correction, destinée à moduler la répartition de charge kp passive du véhicule à cause de ladite différence $\varepsilon$ existant entre la vitesse de lacet mesurée $\dot{\psi}_m$ et la vitesse de lacet $\dot{\psi}_d$ de consigne. Ces moyens 4 peuvent être réalisés par exemple par un correcteur du type intégrateur-proportionnel-intégral PID avec « anti-windup ».

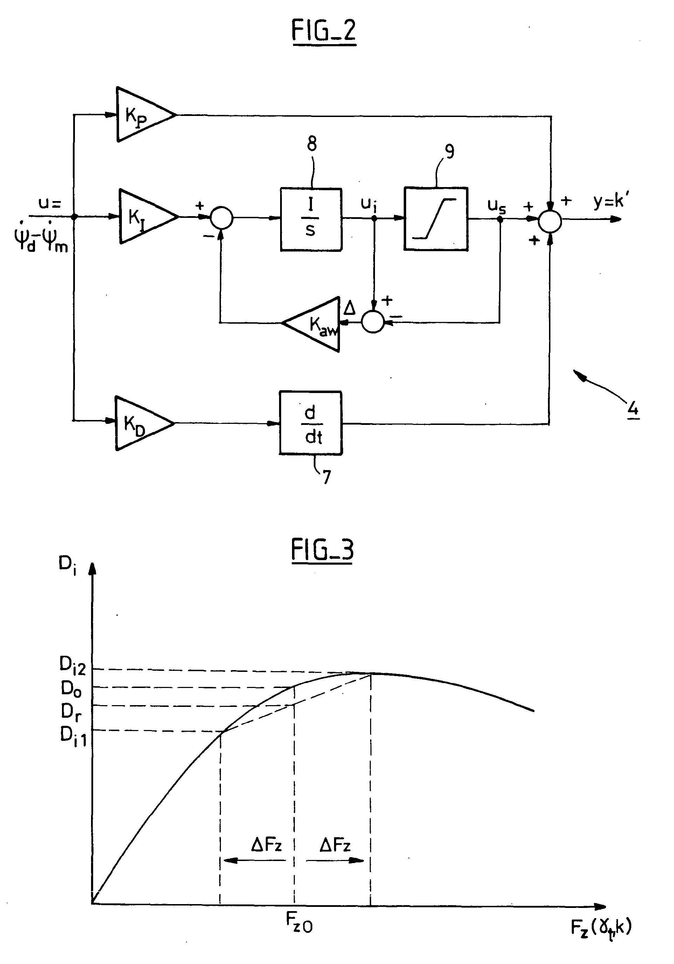

La figure 2 est un schéma d'un tel correcteur proportionnel-intégral-dérivé PID avec désaturation de l'intégrateur, dite « anti-windup ». L'entrée u, qui est égale à la différence $\varepsilon$ entre la vitesse de lacet $\dot{\psi}_m$ mesurée et la consigne $\dot{\psi}_d$ de vitesse de lacet, est multipliée par un premier coefficient de proportionnalité K$_P$ dans une première branche dite proportionnelle, par un deuxième coefficient K$_D$ avant d'être dérivée dans un dérivateur 7 dans une deuxième branche dite dérivée, et enfin par un troisième coefficient K$_I$ avant d'être intégrée par un intégrateur 8 dans une autre branche dite intégrale. Pour éviter que la valeur intégrée u$_I$ ne diverge, elle passe dans un circuit dit « anti-windup », constitué d'un saturateur 9, délivrant une valeur saturée u$_s$ qui est ensuite comparée à la valeur intégrée u$_i$, et leur différence $\Delta$ est multipliée par un gain K$_{aw}$ puis retranchée à la valeur à intégrer $K_I * u$ pour éviter toute divergence de l'intégrateur. Les moyens 4 de commande délivrent en sortie y une répartition de charge k' à appliquer sur les actionneurs des barres anti-roulis, telle qu'elle est la somme des trois branches du correcteur PID :

$$k' = K_P * u + K_D * \frac{du}{dt} + K_I * \int \left[ u - K_{aw}\left(u_i - u_s\right)\right] dt$$

avec $u = \dot{\psi}_d - \dot{\psi}_m$

Cette répartition de charge k' de correction est ajoutée, dans des moyens 11, à la répartition de charge $k_P$ passive du véhicule, qu'elle module pour délivrer la commande k de répartition de charge entre les deux trains : $k = k' + k_p$

Pour s'assurer que le véhicule équipé du système anti-roulis actif ne peut jamais devenir plus instable que le véhicule équipé d'un système de barres anti-roulis passif, le dispositif 1 comporte de plus des moyens 5 de saturation de cette commande k de répartition de charge entre les deux trains, calculée précédemment.

Le véhicule décrit précédemment par l'équation (E$_1$), est stable si les racines carrées du polynôme caractéristique suivant (E$_2$) :

$$(E_2) \qquad s^2 + \left( \frac{D_1 + D_2}{MV} + \frac{D_1 L_1^2 + D_2 L_2^2}{VI_z} \right) s + \frac{D_1 D_2 L^2}{MV^2 I_z} + \frac{D_2 L_2 - D_1 L_1}{I_z}$$

ont une partie réelle négative selon le critère de Routh-Hurwitz, ce qui se traduit par l'inégalité suivante (E$_3$) :

$$(E_3) \qquad D_2 L_2 - D_1 L_1 \rangle 0$$

Pour réaliser cette condition sur les rigidités de dérive $D_1$ et $D_2$ des pneus avant et arrière, le dispositif va piloter la répartition de charge sur les barres anti-roulis.

La charge d'un train de pneus est l'effort vertical appliqué aux pneus de l'essieu avant ou arrière respectivement. Pour cela, le transfert de charge $\Delta F_{Z1}$ ou $\Delta F_{Z2}$ sur le train avant ou arrière respectivement s'exprime en fonction de l'accélération latérale $\gamma_T$, de la masse M du véhicule et de la hauteur h du centre de gravité du véhicule par rapport au sol, selon les expressions suivantes (E$_4$) et (E$_5$) :

$$(E_4) \qquad \Delta F_{Z1} = \frac{Mh\gamma_T}{e_1} * \left(1 - k\right) = \frac{Mh\gamma_T}{e_1} * \left(1 - k' - k_P\right)$$

$$(E_5) \qquad \Delta F_{Z2} = \frac{Mh\gamma_T}{e_2} * k = \frac{Mh\gamma_T}{e_2} * \left(k' + k_P\right)$$

k étant la distribution de report de charge calculée.

La figure 3 montre que les rigidités de dérive $D_i$ de chaque pneu dépendent de l'effort vertical $F_Z$ qui est appliqué au pneu, de façon non linéaire. Le transfert de charge $\Delta F_{zi}$ augmente sur le train i de pneus quand sa rigidité de dérive $D_i$ décroît. La rigidité $D_i$ d'un train de pneus i est obtenue en faisant la somme $D_r$ des rigidités $D_{i1}$ et $D_{i2}$ des deux pneus. Ainsi, si le train i est soumis à un report de charge, sa rigidité initialement référencée $D_0$, est modifiée et devient $D_r$.

Si la répartition du report de charge k est inférieure ou égale à la répartition de charge kp passive du véhicule :

$$k \leq k_P \ \text{ soit } \ k' + k_P \leq k_P \ \text{ soit } \ k' \leq 0$$

alors, les transferts de charge $\Delta F_{Z1}$ et $\Delta F_{Z2}$ sur les trains avant et arrière respectivement, dans le cas d'une commande de répartition de charge k calculée et dans le cas d'une répartition de charge kp passive du véhicule, sont tels que :

$$(E_6) \quad \begin{cases} \Delta F_{Z1}(k) \geq \Delta F_{Z1}(k_p) \\ \Delta F_{Z2}(k) \leq \Delta F_{Z2}(k_p) \end{cases}$$

On en déduit, à partir de la courbe de la figure 3, que la rigidité de dérive $D_1$ et $D_2$ sur les deux trains respectifs avant et arrière est telle que :

$$(E_7) \quad \begin{cases} D_1(k) \leq D_1(k_p) \\ D_2(k) \geq \Delta D_2(k_p) \end{cases}$$

de sorte que le système anti-roulis actif sera effectivement stable si $k \leq k_P$.

En appliquant les conditions ($E_7$) sur la rigidité de dérive à l'inégalité ($E_3$) pour répondre au critère de Routh-Hurwitz, on obtient l'inégalité ($E_8$) suivante :

$$(E_8) \quad D_2(k) * L_2 - D_1(k) * L_1 \succ D_2(k_p) * L_2 - D_1(k_p) * L_1$$

équivalente à ($E_3$) : $D_2 L_2 - D_1 L_1 > 0$

permettant ainsi au véhicule actif d'être au moins aussi stable que le véhicule passif.

Après avoir déterminé le coefficient k de report de charge à appliquer au couple total calculé par ailleurs dans des moyens 11 et ses bornes de saturation pour assurer la stabilité du véhicule, le dispositif comporte de plus des moyens 6 de calcul des consignes de couples $C_{a1}$ et $C_{a2}$ à appliquer sur les trains avant et arrière, à partir dudit couple total $C_T$, de la commande de répartition de charge k, et de l'accélération latérale $\gamma_T$ subie par le véhicule.

Etant donné, d'une part, que la répartition k du report de charge entre l'avant et l'arrière du véhicule est définie comme le quotient du transfert de charge $\Delta F_{Z2}$ sur le train arrière et du transfert de charge $\Delta F_{Z1}$ et $\Delta F_{Z2}$ sur les deux trains, donc qu'elle s'exprime par la relation ($E_9$) suivante :

$$k = \frac{\Delta F_{Z2}}{\Delta F_{Z1} + \Delta F_{Z2}} = k_p + \frac{k_p C_{a1} - (1 - k_p) C_{a2}}{Mh\gamma_T} \quad (E_9)$$

et que le couple total est la somme des couples $C_{a1}$ et $C_{a2}$ sur chaque train :

$$(E_9) \quad C_T = C_{a1} + C_{a2}$$

les expressions desdits couples sont les suivantes en fonction de la configuration :

- en cas de système bi-train, avant et arrière :

$$C_{a1} = (1 - k) C_T + (k - k_p) Mh\gamma_T$$

$$C_{a2} = k_P C_T - (k - k_P) M h \gamma_T$$

- en cas de système mono-train à l'avant :

$$C_{a1} = \frac{k - k_P}{k_P} M h \gamma_T \quad \textbf{et} \quad C_{a2} = 0$$

- en cas de système mono-train à l'arrière:

$$C_{a2} = -\frac{k - k_P}{1 - k_P} M h \gamma_T \quad \textbf{et} \quad C_{a1} = 0$$

Pour respecter la condition de saturation de la répartition k de la charge sur les deux trains permettant d'assurer la stabilité du véhicule :

$$k' + k_P \leq k_P ,$$

on en déduit que les couples $C_{a1}$ et $C_{a2}$ appliqués sur le train avant et sur le train arrière du véhicule sont bornés de la façon suivante, en fonction des configurations du système anti-roulis :

- en cas de système bi-train, avant et arrière :

$$C_{a1} \leq \frac{1 - k_p}{k_p} * C_{a2} \quad \text{si } \gamma_T \succ 0$$

$$c_{a1} \geq \frac{1 - k_p}{k_p} * C_{a2} \quad \text{si } \gamma_T \prec 0$$

- en cas de système mono-train à l'avant :

$$C_{a1} \geq 0 \quad \textbf{si } \gamma_T \prec 0$$

$$C_{a1} \leq 0 \quad \textbf{si } \gamma_T \succ 0$$

- en cas de système mono-train à l'arrière:

$$C_{a2} \geq 0 \quad \text{si } \gamma_T \prec 0$$

$$C_{a2} \leq 0 \ \textbf{si} \ \gamma_T \succ 0$$

Ce procédé de commande du système d'anti-roulis actif permet d'améliorer la stabilité d'un véhicule à partir de l'accélération latérale, de l'angle de braquage du volant, de la vitesse du véhicule, de la vitesse de lacet et du couple appliqué. Ainsi, ce système anti-roulis, qu'il soit de type bi-train ou mono-train, est piloté de façon à optimiser, pour chaque vitesse véhicule, la réponse en lacet du véhicule à la suite d'un coup de volant du conducteur.

**Revendications**

1. Procédé de commande d'un système anti-roulis actif pour véhicule automobile, équipé de deux barres anti-roulis au niveau des trains avant et arrière, associée chacune à un actionneur piloté par une unité centrale électronique en fonction notamment de l'angle du volant et de la vitesse du véhicule, comportant la détermination de la vitesse de lacet de consigne en réponse à un angle de braquage moyen du train avant et à une vitesse longitudinale du véhicule, et le calcul de la différence entre la vitesse de lacet mesurée et la consigne de vitesse de lacet, **caractérisé en ce qu'**il comporte de plus :

   - la détermination d'une répartition de charge (k') de correction à partir de ladite différence ($\varepsilon$) entre la vitesse de lacet mesurée ($\dot{\psi}_m$) et la vitesse de lacet de consigne ($\psi_d$), destinée à moduler la répartition de charge ($k_p$) passive du véhicule,
   - le calcul de la commande (k) de répartition de charge entre les deux trains, à appliquer sur les actionneurs des barres anti-roulis, par modulation de la répartition de charge de référence (kp) par la répartition de charge de correction $k'$ : $k = k' + k_p,$
   - la saturation de ladite commande (k) de répartition de charge entre les deux trains, calculée précédemment, pour assurer la stabilité du véhicule,
   - la détermination des consignes de couples ($C_{a1}$) et ($C_{a2}$) à appliquer sur les trains avant et arrière, à partir d'une part, d'une consigne du couple total anti-roulis ($C_T$) calculé par ailleurs et de la répartition saturée de charge (k) entre les deux trains et d'autre part, de l'accélération latérale ($\gamma_T$) subie par le véhicule.

2. Procédé de commande d'un système anti-roulis actif selon la revendication 1, **caractérisé en ce que** la saturation de la commande (k) de répartition de charge entre les deux trains est telle que sa valeur est inférieure ou égale à la répartition de charge ($k_p$) passive du véhicule.

3. Procédé de commande d'un système anti-roulis actif selon la revendication 1, **caractérisé en ce que** les consignes de couples ($C_{a1}$) et ($C_{a2}$) à appliquer sur les trains avant et arrière sont bornées de la façon suivante, en fonction des configurations du système anti-roulis, pour assurer la stabilité du véhicule :

   - en cas de système bi-train, avant et arrière :

$$C_{a1} \leq \frac{1-k_p}{k_p} * C_{a2} \qquad \textbf{si} \ \gamma_{\dot{T}} \succ 0$$

$$c_{a1} \geq \frac{1-k_p}{k_p} * C_{a2} \qquad \textbf{si} \ \gamma_T \prec 0$$

   - en cas de système mono-train à l'avant :

$$C_{a1} \geq 0 \quad \textbf{si} \ \gamma_T \prec 0$$

$$C_{a1} \leq 0 \quad \text{si} \quad \dot{\gamma}_T \succ 0$$

- en cas de système mono-train à l'arrière :

$$C_{a2} \geq 0 \quad \text{si} \quad \dot{\gamma}_T \prec 0$$

$$C_{a2} \leq 0 \quad \text{si} \quad \dot{\gamma}_T \succ 0$$

4. Dispositif de mise en oeuvre d'un procédé de commande d'un système anti-roulis actif pour véhicule, intégré dans une unité centrale électronique du véhicule et pilotant au moins un actionneur agissant sur la raideur d'au moins une des deux barres anti-roulis, selon les revendications 1 à 3, **caractérisé en ce qu'**il comporte :

   - des moyens (2) de détermination de la consigne de vitesse de lacet ($\psi_d$) en réponse à un angle de braquage moyen ($\alpha$) du train avant et à une vitesse longitudinale (V) du véhicule,
   - des moyens (3) de calcul de la différence ($\varepsilon$) entre la vitesse de lacet ($\dot{\psi}_m$) mesurée et la consigne ($\dot{\psi}_d$) de vitesse de lacet,
   - des moyens (4) de commande délivrant une répartition de charge (k') de correction à appliquer sur les actionneurs des barres anti-roulis à partir de ladite différence ($\varepsilon$) entre la vitesse de lacet mesurée ($\dot{\psi}_m$) et la vitesse de lacet de consigne ($\dot{\psi}_d$),
   - des moyens (11) de calcul de la commande (k) de répartition de charge entre les deux trains, résultant de la modulation de la répartition de charge passive du véhicule par la répartition de charge de correction :

$$k = k' + k_p$$

   - des moyens (5) de saturation de ladite commande de répartition de charge pour assurer la stabilité du véhicule,
   - des moyens (6) de calcul des consignes de couples ($C_{a1}$) et ($C_{a2}$) à appliquer sur les trains avant et arrière, à partir du couple total ($C_T$) calculé dans les moyens (10), de la répartition de charge (k), et de l'accélération latérale ($\gamma_T$) subie par le véhicule.

5. Dispositif de mise en oeuvre d'un procédé de commande d'un système anti-roulis actif selon la revendication 4, **caractérisé en ce que** lesdits moyens (4) de commande délivrant une répartition de charge (k') de correction à partir de ladite différence ($\varepsilon$) entre la vitesse de lacet mesurée ($\dot{\psi}_m$) et la vitesse de lacet de consigne ($\dot{\psi}_d$), sont réalisés par un correcteur du type intégrateur-proportionnel-intégral PID avec désaturation de l'intégrateur , dite « anti-windup ».

6. Dispositif de mise en oeuvre d'un procédé de commande d'un système anti-roulis actif selon la revendication 4, **caractérisé en ce que** lesdits moyens (5) de saturation de la commande (k) de répartition de charge entre les deux trains du véhicule, calculée pour assurer la stabilité du véhicule, lui imposent d'être inférieure ou égale à la répartition de charge ($k_p$) passive du véhicule, donc que la répartition de charge (k') de correction, à appliquer sur les actionneurs des barres anti-roulis à partir de ladite différence ($\varepsilon$) entre la vitesse de lacet mesurée ($\dot{\psi}_m$) et la vitesse de lacet désirée ($\dot{\psi}_d$), soit négative par pilotage des dérives ($D_1$ et $D_2$) des deux trains de pneus.

7. Dispositif de mise en oeuvre d'un procédé de commande d'un système anti-roulis actif selon la revendication 4, **caractérisé en ce que** lesdits moyens (2) de détermination de la consigne de vitesse de lacet ($\dot{\psi}_d$) en réponse à un angle de braquage moyen ($\alpha$) du train avant et à une vitesse longitudinale (V) du véhicule, sont réalisés à partir d'un modèle à deux roues, utilisant la vitesse de véhicule selon l'équation suivante ($E_1$) :

$$(E_1) \quad \frac{\partial}{\partial t}\begin{bmatrix} \delta \\ \dot{\psi}_d \end{bmatrix} = \begin{bmatrix} -\dfrac{D_1 L_1^2 + D_2 L_2^2}{V I_z} & \dfrac{D_2 L_2 - D_1 L_1}{I_z} \\ -1 + \dfrac{D_2 L_2 - D_1 L_1}{M V^2} & -\dfrac{D_1 + D_2}{MV} \end{bmatrix} \begin{bmatrix} \delta \\ \dot{\psi}_d \end{bmatrix} + \begin{bmatrix} \dfrac{D_1 L_1}{I_z} \\ \dfrac{D_1}{MV} \end{bmatrix} \alpha$$

dans laquelle M est la masse totale du véhicule, $I_z$ son inertie autour d'un axe vertical passant par son centre de gravité, $L_1$ et $L_2$ la distance du centre de gravité aux essieux avant et arrière respectivement, a l'angle de braquage moyen du train avant, $D_1$ et $D_2$ la rigidité de dérive des trains avant et arrière respectivement et δ l'angle de dérive.

## Claims

1. Method for controlling an active anti-roll system for a motor vehicle, fitted with two anti-roll bars on the front and rear axle systems, each associated with an actuator driven by a central electronic unit as a function notably of the angle of the steering wheel and of the speed of the vehicle, comprising the determination of the setpoint yaw speed in response to a mean steering angle of the front axle system and to a longitudinal speed of the vehicle, and the calculation of the difference between the measured yaw speed and the setpoint of yaw speed, **characterized in that** it also comprises:

   - the determination of a distribution of correction load (k') on the basis of the said difference (ε) between the measured yaw speed $(\dot{\psi}_m)$ and the setpoint yaw speed $(\dot{\psi}_d)$, designed to modulate the distribution of passive load ($k_p$) of the vehicle,
   - the calculation of the control (k) for distribution of load between the two axle systems to be applied to the actuators of the anti-roll bars, by modulation of the reference distribution of load ($k_p$) by the distribution of correction load k': k = k' + $k_p$,
   - the saturation of the said control (k) for distribution of load between the two axle systems, calculated previously, in order to ensure the stability of the vehicle,
   - the determination of the setpoints of torques ($C_{a1}$) and ($C_{a2}$) to be applied to the front and rear axle systems, on the basis, on the one hand, of a setpoint of the total anti-roll torque ($C_T$) calculated elsewhere and of the saturated distribution of load (k) between the two axle systems and, on the other hand, of the lateral acceleration ($\gamma_T$) sustained by the vehicle.

2. Method for controlling an active anti-roll system according to Claim 1, **characterized in that** the saturation of the control (k) for distribution of load between the two axle systems is such that its value is less than or equal to the distribution of passive load ($k_p$) of the vehicle.

3. Method for controlling an active anti-roll system according to Claim 1, **characterized in that** the setpoints of torques ($C_{a1}$) and ($C_{a2}$) to be applied to the front and rear axle systems are limited in the following manner, as a function of the configurations of the anti-roll system, in order to ensure the stability of the vehicle:

   - in the case of a system with two axle systems, front and rear:

$$C_{a1} \leq \frac{1 - k_p}{k_p} * C_{a2} \qquad \text{if } \gamma_T \succ 0$$

$$C_{a1} \geq \frac{1 - k_p}{k_p} * C_{a2} \qquad \text{if } \gamma_T \prec 0$$

- in the case of a system with a single axle system at the front:

$$C_{a1} \geq 0 \quad \text{if} \ \gamma_T \prec 0$$

$$C_{a1} \leq 0 \quad \text{if} \ \gamma_T \succ 0$$

- in the case of a system with a single axle system at the rear:

$$C_{a2} \geq 0 \quad \text{if} \ \gamma_T \prec 0$$

$$C_{a2} \leq 0 \quad \text{if} \ \gamma_T \succ 0$$

4. Device for applying a method for controlling an active anti-roll system for a vehicle, incorporated into a central electronic unit of the vehicle and driving at least one actuator acting on the stiffness of at least one of the two anti-roll bars, according to Claims 1 to 3, **characterized in that** it comprises:

- means (2) for determining the setpoint of yaw speed $(\dot{\psi}_d)$ in response to a mean steering angle ($\alpha$) of the front axle system and to a longitudinal speed (V) of the vehicle,
- means (3) for computing the difference ($\varepsilon$) between the measured yaw speed $(\dot{\psi}_m)$ and the setpoint $(\dot{\psi}_d)$ of yaw speed,
- control means (4) delivering a distribution of correction load (k') to be applied to the actuators of the anti-roll bars on the basis of the said difference ($\varepsilon$) between the measured yaw speed $(\dot{\psi}_m)$ and the setpoint yaw speed $(\dot{\psi}_d)$,
- means (11) for calculating the control (k) for distribution of load between the two axle systems, resulting from the modulation of the distribution of passive load of the vehicle by the distribution of correction load:

$$k = k' + k_p$$

- means (5) for saturating the said load-distribution control in order to ensure the stability of the vehicle,
- means (6) for calculating setpoints of torques ($C_{a1}$) and ($C_{a2}$) to be applied to the front and rear axle systems, on the basis of the total torque ($C_T$), calculated in the means (10), of the distribution of load (k), and of the lateral acceleration ($\gamma_T$) sustained by the vehicle.

5. Device for applying a method for controlling an active anti-roll system according to Claim 4, **characterized in that** the said control means (4) delivering a distribution of correction load (k') on the basis of the said difference ($\varepsilon$) between the measured yaw speed $(\dot{\psi}_m)$ and the setpoint yaw speed $(\dot{\psi}_d)$, are carried out by a corrector of the proportional-integral-derivative type PID with desaturation of the derivative, called "anti-windup".

6. Device for applying a method for controlling an active anti-roll system according to Claim 4, **characterized in that** the said means (5) for saturating the control (k) for distribution of load between the two axle systems of the vehicle, calculated in order to ensure the stability of the vehicle, require it to be less than or equal to the distribution of passive load ($k_p$) of the vehicle, hence that the distribution of correction load (k'), to be applied to the actuators of the anti-roll bars on the basis of the said difference ($\varepsilon$) between the measured yaw speed $(\dot{\psi}_m)$ and the desired yaw speed $(\dot{\psi}_d)$, be negative by controlling the drifts ($D_1$ and $D_2$) of the two sets of tyres.

7. Device for applying a method for controlling an active anti-roll system according to Claim 4, **characterized in that** the said means (2) for determining the setpoint of yaw speed $(\dot{\psi}_d)$ in response to a mean angle of steering ($\alpha$) of the front axle system and to a longitudinal speed (V) of the vehicle, are carried out on the basis of a two-wheel model, using the vehicle speed according to the following equation ($E_1$) :

$$(E_1) \quad \frac{\partial}{\partial t}\begin{bmatrix} \delta \\ \dot{\psi}_d \end{bmatrix} = \begin{bmatrix} -\dfrac{D_1 L_1^2 + D_2 L_2^2}{v\, I_z} & \dfrac{D_2 L_2 - D_1 L_1}{I_z} \\ -1 + \dfrac{D_2 L_2 - D_1 L_1}{M\, V^2} & -\dfrac{D_1 + D_2}{MV} \end{bmatrix}\begin{bmatrix} \delta \\ \dot{\psi}_d \end{bmatrix} + \begin{bmatrix} \dfrac{D_1 L_1}{I_z} \\ \dfrac{D_1}{MV} \end{bmatrix}\alpha$$

in which M is the total weight of the vehicle, $I_z$ its inertia about a vertical axis passing through its centre of gravity, $L_1$ and $L_2$ the distance from the centre of gravity to the front and rear axles respectively, $\alpha$ the mean steering angle of the front axle system, $D_1$ and $D_2$ the rigidity of drift of the front and rear axle systems respectively and $\delta$ the angle of drift.

**Patentansprüche**

1. Verfahren zur Steuerung eines aktiven Wankstabilisierungssystems für ein Kraftfahrzeug, das mit zwei Querstabilisatoren in Höhe der Vorder- und der Hinterachse ausgestattet ist, die je einem Stellantrieb zugeordnet sind, der von einer elektronischen Zentraleinheit in Abhängigkeit insbesondere vom Lenkradwinkel und von der Geschwindigkeit des Fahrzeugs gesteuert wird, das die Bestimmung der Soll-Giergeschwindigkeit als Reaktion auf einen mittleren Lenkeinschlagwinkel der Vorderachse und auf eine Längsgeschwindigkeit des Fahrzeugs und die Berechnung der Differenz zwischen der gemessenen Giergeschwindigkeit und dem Giergeschwindigkeitssollwert aufweist, **dadurch gekennzeichnet, dass** es darüber hinaus aufweist:

   - die Bestimmung einer Korrektur-Lastverteilung (k') ausgehend von der Differenz ($\varepsilon$) zwischen der gemessenen Giergeschwindigkeit ($\dot{\Psi}_m$) und der Soll-Giergeschwindigkeit ($\dot{\Psi}_d$), die dazu bestimmt ist, die passive Lastverteilung ($k_p$) des Fahrzeugs zu modulieren,
   - die Berechnung der Lastverteilungssteuerung (k) zwischen den zwei Achsen, anzuwenden auf die Stellantriebe der Querstabilisatoren, durch Modulation der Bezugslastverteilung ($k_p$) durch die Korrekturlastverteilung k' : k = k' + $k_p$,
   - die Sättigung der Lastverteilungssteuerung (k) zwischen den zwei Achsen, vorab berechnet, um die Stabilität des Fahrzeugs zu gewährleisten,
   - die Bestimmung der Sollwerte von Drehmomenten ($C_{a1}$) und ($C_{a2}$), die an die Vorderachse und die Hinterachse anzuwenden sind, ausgehend einerseits von einem Sollwert des außerdem berechneten Gesamtdrehmoments der Wankstabilisierung ($C_T$) und der gesättigten Lastverteilung (k) zwischen den zwei Achsen, und andererseits von der Seitenbeschleunigung ($\gamma_T$), die das Fahrzeug erfährt.

2. Verfahren zur Steuerung eines aktiven Wankstabilisierungssystems nach Anspruch 1, **dadurch gekennzeichnet, dass** die Sättigung der Lastverteilungssteuerung (k) zwischen den zwei Achsen derart ist, dass ihr Wert geringer als die oder gleich der passiven Lastverteilung (kp) des Fahrzeugs ist.

3. Verfahren zur Steuerung eines aktiven Wankstabilisierungssystems nach Anspruch 1, **dadurch gekennzeichnet, dass** die an die Vorderachse und an die Hinterachse anzuwendenden Sollwerte von Drehmomenten ($C_{a1}$) und ($C_{a2}$) in Abhängigkeit von den Konfigurationen des Wankstabilisierungssystems folgendermaßen begrenzt sind, um die Stabilität des Fahrzeugs zu gewährleisten:

   - im Fall eines Zwei-Achsen-Systems, vorne und hinten:

$$C_{a1} \leq \frac{1 - k_p}{k_p} * C_{a2} \quad \text{wenn } \gamma_T \succ 0$$

gilt

$$C_{a1} \geq \frac{1 - k_p}{k_p} * C_{a2} \quad \text{wenn} \quad \gamma_T \prec 0$$

gilt
- im Fall eines Ein-Achsen-Systems vorne:

$$C_{a1} \geq 0 \quad \text{wenn} \quad \gamma_T \prec 0$$

gilt

$$C_{a1} \leq 0 \quad \text{wenn} \quad \gamma_T \succ 0$$

gilt
- im Fall eines Ein-Achsen-Systems hinten:

$$C_{a2} \geq 0 \quad \text{wenn} \quad \gamma_T \prec 0$$

gilt

$$C_{a2} \leq 0 \quad \text{wenn} \quad \gamma_T \succ 0$$

gilt

**4.** Vorrichtung zur Durchführung eines Verfahrens zur Steuerung eines aktiven Wankstabilisierungssystems für ein Fahrzeug, die in eine elektronische Zentraleinheit des Fahrzeugs integriert ist und mindestens einen Stellantrieb steuert, der auf die Steifheit mindestens eines der zwei Querstabilisatoren einwirkt, gemäß den Ansprüchen 1 bis 3, **dadurch gekennzeichnet, dass** sie aufweist:

- Einrichtungen (2) zur Bestimmung des Giergeschwindigkeitssollwerts ($\dot{\Psi}_d$) als Reaktion auf einen mittleren Lenkeinschlagwinkel ($\alpha$) der Vorderachse und auf eine Längsgeschwindigkeit (V) des Fahrzeugs,
- Einrichtungen (3) zur Berechnung der Differenz ($\varepsilon$) zwischen der gemessenen Giergeschwindigkeit ($\dot{\Psi}_m$) und dem Giergeschwindigkeitssollwert ($\dot{\Psi}_d$),
- Steuereinrichtungen (4), die eine Korrekturlastverteilung (k') liefern, die an die Stellantriebe der Querstabilisatoren anzuwenden ist, ausgehend von der Differenz ($\varepsilon$) zwischen der gemessenen Giergeschwindigkeit ($\dot{\Psi}_m$) und der Soll-Giergeschwindigkeit ($\dot{\Psi}_d$),
- Einrichtungen (11) zur Berechnung der Lastverteilungssteuerung (k) zwischen den zwei Achsen, resultierend aus der Modulation der passiven Lastverteilung des Fahrzeugs durch die Korrekturlastverteilung:

$$k = k' + k_p$$

- Einrichtungen (5) zur Sättigung der Lastverteilungssteuerung, um die Stabilität des Fahrzeugs zu gewährleisten,
- Einrichtungen (6) zur Berechnung der Sollwerte von an die Vorderachse und die Hinterachse anzuwendenden Drehmomenten ($C_{a1}$) und ($C_{a2}$) ausgehend vom in den Einrichtungen (10) berechneten Gesamtdrehmoment ($C_T$), von der Lastverteilung (k), und von der vom Fahrzeug erfahrenen Seitenbeschleunigung ($\gamma_T$).

5. Vorrichtung zur Durchführung eines Verfahrens zur Steuerung eines aktiven Wankstabilisierungssystems nach Anspruch 4, **dadurch gekennzeichnet, dass** die Steuereinrichtungen (4), die eine Korrekturlastverteilung (k') ausgehend von der Differenz ($\varepsilon$) zwischen der gemessenen Giergeschwindigkeit ($\dot{\Psi}_m$) und der Soll-Giergeschwindigkeit ($\dot{\Psi}_d$) liefern, durch ein Korrekturglied vom Typ Proportional-Integral-Integrator PID mit Entsättigung des Integrators, genannt "anti-windup", realisiert werden.

6. Verfahren zur Durchführung eines Verfahrens zur Steuerung eines aktiven Wankstabilisierungssystems nach Anspruch 4, **dadurch gekennzeichnet, dass** die Einrichtungen (5) zur Sättigung der Lastverteilungssteuerung (k) zwischen den zwei Achsen des Fahrzeugs, berechnet, um die Stabilität des Fahrzeugs zu gewährleisten, sie zwingen, geringer als die oder gleich der passiven Lastverteilung ($k_p$) des Fahrzeugs zu sein, also dass die Korrekturlastverteilung (k'), die an die Stellantriebe der Querstabilisatoren ausgehend von der Differenz ($\varepsilon$) zwischen der gemessenen Giergeschwindigkeit ($\dot{\Psi}_m$) und der gewünschten Giergeschwindigkeit ($\dot{\Psi}_d$) anzuwenden ist, durch Steuerung der Driften ($D_1$ und $D_2$) der zwei Reifenachsen negativ ist.

7. Vorrichtung zur Durchführung eines Verfahrens zur Steuerung eines aktiven Wankstabilisierungssystems nach Anspruch 4, **dadurch gekennzeichnet, dass** die Einrichtungen (2) zur Bestimmung des Giergeschwindigkeitssollwerts ($\dot{\Psi}_d$) als Reaktion auf einen mittleren Lenkeinschlagwinkel ($\alpha$) der Vorderachse und auf eine Längsgeschwindigkeit (V) des Fahrzeugs ausgehend von einem Modell mit zwei Rädern hergestellt werden, das die Geschwindigkeit des Fahrzeugs gemäß der folgenden Gleichung verwendet ($E_1$):

$$(E_1) \quad \frac{\partial}{\partial t}\begin{bmatrix} \delta \\ \dot{\psi}_d \end{bmatrix} = \begin{bmatrix} -\dfrac{D_1 L_1^2 + D_2 L_2^2}{V\, I_z} & \dfrac{D_2 L_2 - D_1 L_1}{I_z} \\ -1 + \dfrac{D_2 L_2 - D_1 L_1}{M\, V^2} & -\dfrac{D_1 + D_2}{MV} \end{bmatrix} \begin{bmatrix} \delta \\ \dot{\psi}_d \end{bmatrix} + \begin{bmatrix} \dfrac{D_1 L_1}{I_z} \\ \dfrac{D_1}{MV} \end{bmatrix} \alpha$$

in der M die Gesamtmasse des Fahrzeugs, $I_z$ seine Trägheit um eine durch seinen Schwerpunkt verlaufende senkrechte Achse, $L_1$ und $L_2$ der Abstand des Schwerpunkts zur vorderen bzw. hinteren Wagenachse, $\alpha$ der mittlere Lenkwinkel der Vorderachse, $D_1$ und $D_2$ die Driftsteifigkeit der Vorderachse bzw. der Hinterachse und $\delta$ der Driftwinkel bedeuten.

$$\text{FIG\_1}$$

## FIG_2

## FIG_3

**EP 2 013 043 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5948027 A